# EUROPEAN PATENT APPLICATION

(11) **EP 4 223 444 A1**
(43) Date of publication of application: **09.08.2023**
(21) Application number: 22020034.9
(22) Date of filing: 04.02.2022
(51) Int. Cl.: B23K 9/173, B23K 9/12, B23K 9/14

(54) **MULTI WIRE FEED GMAW**

(71) Applicant: Linde GmbH, 82049 Pullach (DE)
(72) Inventor: Siewert, Erwan, 82049 Pullach (DE); Hussary, Nakhleh A., 82049 Pullach (DE)
(74) Representative: Lu, Jing

(57) **Abstract**

The present invention relates to a welding apparatus (1), comprising: a first wire (2) comprising an end section (2a) extending along a first direction (D1), the end section of the first wire comprising a tip (2b), a second wire (3) comprising an end section (3a) extending along a second direction (D2), the end section of the second wire (3) comprising a tip (3b) and being electrically insulated from the first wire (2), a power supply (4) electrically connectable by the welding apparatus (1) to the first wire (2) to generate an electrical current through the tip (2b) of the first wire (2) that generates an arc (5) between the tip (2b) of the first wire (2) and at least one workpiece (6) to be welded so as to cause transfer of material of the end section (2a) of the first wire (2) to the at least one workpiece (6), the second wire (3) being electrically insulated from the power supply (4) and the first wire (2), a first wire feed unit (20) configured to feed the first wire (2) into a weld pool (50) on the at least one workpiece (6) in the first direction (D1) with a first wire feed speed (v1), and a second wire feed unit (30) configured to feed the second wire (3) into the weld pool (50) in the second direction (D2) with a second wire feed speed (v2), wherein the first direction (D1) and the second direction (D2) run at an angle (α) to each other that is in the range from 0° to 25°.

## Description

The present invention relates to a welding apparatus for multi wire feed GAMW and to a corresponding method.

Particularly, gas metal arc welding (GAMW) uses the main wire to carry the main current which, when welding at high speeds with high currents, results in significant evaporation of the wire causing loss of alloying elements and particulate emissions of such elements that are harmful (such as chrome, etc.).

The present invention aims at addressing downsides of the above-described classical GAMW method. Particularly, injection of filler wire is typically conducted mainly in TIG and plasma welding processes at angles that are well above 45° and typically close to 90° (almost flat injection in the weld pool).

Based on the above, the problem to be solved by the present invention is to provide a welding apparatus and a corresponding welding method that are improved regarding the above-stated disadvantages.

This problem is solved by a welding apparatus having the features of claim 1 as well as by a welding method having the features of claim 11.

Preferred embodiments of these aspects of the present invention are stated in the corresponding sub claims and are described below.

According to claim 1, a welding apparatus is disclosed, the welding apparatus comprising:
- a first wire comprising an end section extending along a first direction, the end section comprising a tip,
- a second wire comprising an end section extending along a second direction, the end section of the second wire comprising a tip and being electrically insulated from the first wire,
- a power supply electrically connectable by the apparatus to the first wire to generate an electrical current through the tip of the first wire that generates an arc between the tip of the first wire and at least one workpiece to be welded so as to cause transfer of material of the end section of the first wire to the at least one workpiece, the second wire being electrically insulated from the power supply and the first wire,
- a first wire feed unit configured to feed the first wire in the first direction with a first wire feed speed toward a weld pool generated by the arc on the at least one workpiece, and
- a second wire feed unit configured to feed the second wire toward the weld pool in the second direction with a second wire feed speed, wherein the first direction and the second direction run at an angle to each other that is in the range from 0° to 25°.

Preferably, in an embodiment of the welding apparatus, the welding apparatus comprises a torch, the torch comprising a wire feeding tip through which the first and the second wire are transported in the respective (first and second) direction the wire feeding tip being configured to conduct said electrical current into the first wire while insulating the second wire from the first wire and the power supply.

Further, in an embodiment of the welding apparatus, the welding apparatus is configured such that the second wire does not carry an arc-generating electrical current.

According to a further embodiment of the welding apparatus, the welding apparatus is configured such that the second wire does either not carry an arc-generating electrical current or allows the arc to temporarily jump over from the tip of the first wire to the second wire depending on the second wire feed speed (e.g. when the second wire feed speed exceeds a certain threshold value).

Furthermore, according to an embodiment of the welding apparatus, the torch is configured to allow adjustment of said angle in said range. Preferably, said angle is in the range from 0° to 15°, wherein 0° means, that the end sections of the two wires run parallel to one another.

Further, in an embodiment of the welding apparatus, the first wire feed unit is configured to feed the first wire with a first wire feed speed being equal to 8m/min or larger. Alternatively, or in addition, the second wire feed unit is configured to feed the second wire with a second wire feed speed in the range from 0.5m/min to 6m/min, preferably in the range from 2 m/min to 4m/min.

According to a further embodiment, the torch comprises a gas nozzle configured to discharge a welding gas onto the weld pool, particularly to provide protection from the atmosphere and/or to modify the properties of the arc. Particularly, the welding gas can be one of: Argon, argon CO₂ mixtures, argon O₂ mixtures, mixtures out of argon, CO₂ and O₂, argon hydrogen mixtures, argon hydrogen, CO₂ mixtures. Particularly, nitrogen can be added in small amounts to the respective welding gas.

Furthermore, according to an embodiment, said transfer of material corresponds to spray transfer. Particularly, the basic characteristic of spray transfer is that the droplet size of material transferred from the first wire to the workpiece upon welding is smaller than a diameter of the first wire.

Further, in an embodiment of the welding apparatus, for increasing a melting rate of the second wire and for improving a droplet detachment of material from the second wire, the welding apparatus is preferably configured to oscillate the second wire back and forth in the second direction upon feeding the second wire into the weld pool, particularly without the arc jumping from the first to the second wire. Particularly, said oscillating movement comprises that the forward movement of the first wire into the weld pool outweighs the backward movement so that overall the first wire is fed to the weld pool.

Yet a further aspect of the present invention relates to a welding method for welding at least one workpiece using a welding device according to the present invention, wherein the method comprises the steps of:
- generating an arc between the tip of the first wire and the at least one workpiece,
- feeding the first wire toward a weld pool generated on the at least one workpiece by the arc in the first direction with a first wire feed speed, and
- feeding the second wire toward the weld pool in the second direction with a second wire feed speed, the first direction and the second direction running at an angle to each other that is in the range from 0° to 25°.

According to an embodiment of the method, the second wire feed speed is controlled based on a total arc voltage. Furthemore, particularly, if a sensing cable is used for measuring the total arc voltage, the latter is the voltage between the contact tip and the workpiece. If no sensing cables are used the total voltage will include in addition also voltage losses in the cables and leads.

Particularly, in an embodiment of the method, feeding the second wire into the weld pool is started with increasing second wire feed speed after having started feeding the first wire into the weld pool, wherein both wires are then fed simultaneously into the weld pool.

Furthermore, according to an embodiment of the method, upon feeding the second wire into the weld pool, the total arc voltage is measured, wherein once an increase in the total arc voltage is recognized, increasing the second wire feed speed is stopped and the second wire feed speed is reduced by at least 5% in order to ensure a safe and reliable operating window.

Furthermore, in an embodiment of the method according to the present invention, to increase a melting rate and to improve a droplet detachment of material from the second wire, the second wire is oscillated back and forth in the second direction upon feeding the second wire into the weld pool (see also above).

According to yet another embodiment of the method, the arc is forced to jump from the first wire to the second wire upon welding, particularly while avoiding evaporation of the second wire at the same time.

In the following embodiments of the present invention as well as further features and advantages shall be described with reference to the Figures, wherein
- Fig. 1: shows an embodiment of a welding apparatus according to the present invention; and
- Fig. 2: shows different wire feed speeds of the first and the second wire.

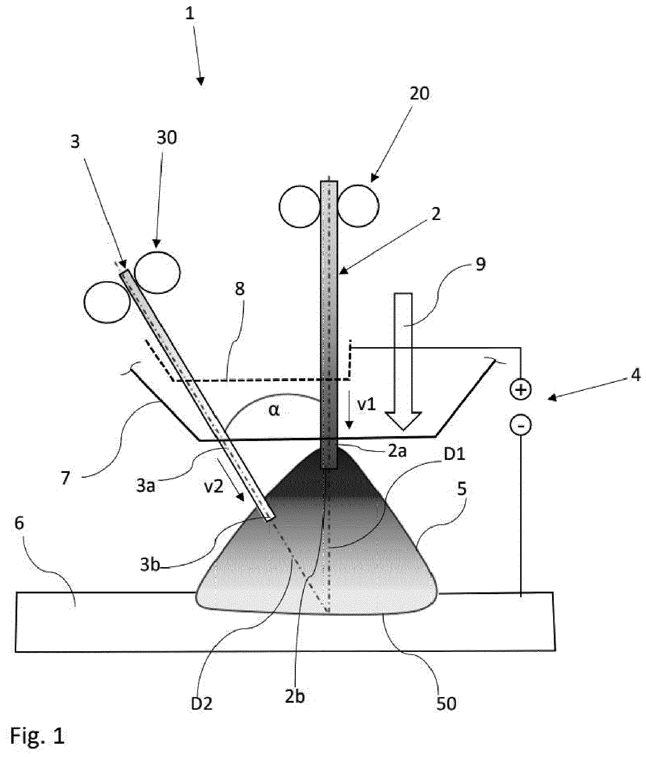

Fig. 1 shows an embodiment of a welding apparatus 1 according to the present invention. The welding apparatus 1 comprises a first wire 2 comprising an end section 2a extending along a first direction D1, the end section 2a of the first wire 2 comprising a tip 2b, and a second wire 3 comprising an end section 3a extending along a second direction D2, the end section 3a of the second wire 3 comprising a tip 3b and being electrically insulated from the first wire 2. Furthermore, the apparatus 1 comprises a power supply 4 for generating an arc 5, the power supply 4 being electrically connected to the first wire 2 to generate an electrical current I through the tip 2b of the first wire 2 that generates said arc 5 between the tip 2b of the first wire 2 and at least one metal workpiece 6 to be welded so as to cause transfer of material of the end section 2a of the first wire 2 to the at least one workpiece 6, the second wire 3 being electrically insulated from the power supply 4 and the first wire 2 so to not carry the current that produces the arc 5. Particularly, while the first wire 2 can comprise Fe as main component of an alloy comprised by the first wire 2, the second wire 3 preferably is a high alloyed wire that comprises components selected preferably from the group consisting of Cr, Ni, Mo, Mn.

Furthermore, the welding apparatus 1 preferably comprises a first wire feed unit 20 configured to feed the first wire 2 into (or towards) a weld pool 50 generated by the arc 5 on the at least one workpiece 6 in the first direction D1 with a first wire feed speed v1, as well as a second wire feed unit 30 configured to feed the second wire 3 into (or towards) the weld pool 50 in the second direction D2 with a second wire feed speed v2, wherein the first direction D1 and the second direction D2 run at an angle α to each other.

Further, as schematically indicated in Fig. 1 the welding apparatus 1 comprises a torch 7 that is movable with respect to the workpiece 6 so as to generate a weld seam, particularly to connect the at least one workpiece 6 to an adjacent second workpiece. The torch 7 preferably comprises a wire feeding tip 8 through which the first and the second wire 2, 3 can be transported out of the torch 7 in the respective direction D1, D2, particularly so as to transfer material from the first wire's end section 2a to the workpiece(s) 6, e.g. via spray transfer, and to e.g. dip the tip 3b of the second wire into the weld pool 50, i.e., the second wire forms a filler wire that is melted in the weld pool 50. Particularly, the second wire 3 can be welded in the arc without even touching the weld pool, e.g., at low speeds, or can be melted partly in the arc as well as partly in the weld pool at higher speeds. Thus, in the framework of the present invention, feeding the respective wire into the weld pool also encompasses situations where the respective wire is fed towards the weld pool.

The wire feeding tip 8 is configured to conduct said electrical current I into the first wire 2 while insulating the second wire 3 from the first wire 2 and the power supply 4, so that generally only the first wire 2 carries the current I that generates the arc 5.

The two wires 2, 3 are geometrically related in such a way that the angle α between them can vary from being parallel, i.e. α=0°, to an angle of up to α=25°. Preferably, the angle α is in range from 0° to 15°.

Preferably, the wire feed speed v2 of the second wire 3 is controlled such that the second wire 3 is limited in its penetration into the arc zone 5. The wire feed speed v2 is preferably limited to the range between 0.5m/min and 6m/min, wherein m denotes meter and min denotes minutes, preferably between 2m/min to 4m/min. This has the effect of eliminating the phenomenon of the arc 5 jumping from the first wire 2 to the second wire 3 and causing welding defects.

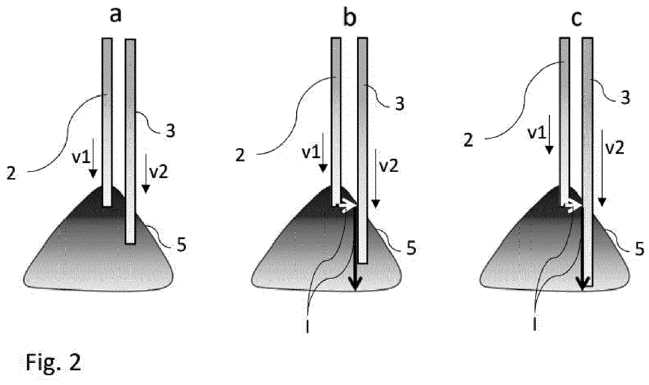

Fig. 2 illustrates different wire feed speeds v2 of the second wire 3, wherein (a) shows the situation of an optimal wire feed speed v2 preventing the current arc 5 to jump from the first wire 2 to the second wire 3 and ensuring wire melting. Parts (b) and (c) of Fig. 2 show higher wire feed speeds v2 causing the arc 5 to jump from the first wire 2 to the second wire 3. The corresponding current path I is schematically depicted by arrows.

Preferably, as already indicated above, the twin wire welding process is performed with the first wire 2 melting in spray transfer ensuring an efficient metal deposition. The second wire 3, typically a high alloyed wire (see also above), does not overheat or uncontrollably vaporize and thus ensuring the deposition of most of its content in the weld pool 50 and significantly limiting dangerous particulate emissions.

Proper control strategies can be implemented to ensure that the amounts of alloying elements needed is satisfied and the emissions of harmful elements are eliminated or minimized. According to embodiments of the present invention, such strategies can include one or several of the following measures.

Preferably, an appropriate wire feed speed v1 of the first wire (main arc current I) and an appropriate wire feed speed v2 of the second wire 3 is selected.

Further, particularly, a welding speed (i.e. a speed of the torch 7 with respect to the workpiece(s) 6) is synchronized with the selected wire feed speeds v1, v2.

Furthermore, an alloying element content, particularly of the second wire 3, is selected based on said selection of wire feed speeds v1, v2 and of said welding speed to optimize the content of alloying elements in the weld.

Furthermore, if the arc 5 is close to the situation where the arc 5 is jumping from the first wire 2 to the second wire 3, the number of arc fall regions should increase from two (cathode - anode) to four fall regions (anode - first wire, cathode - second wire, anode - second wire, cathode - workpiece), or three in case that the second wire is in direct contact with the weld pool. As the voltage drop in the fall regions is massive compared to the arc region, the total voltage is significantly increasing. The wire feed speed v2 of the second wire 3 is therefore preferably controlled via the total arc voltage.

Furthermore, preferably, the welding process is started only with the first wire 2. Once a stable welding process is achieved, the second wire 3 is moved into the arc 5 with slowly increasing wire feed speed v2. While feeding the second wire 3 into the arc 5, the total arc voltage is measured. Once an increase in the total arc voltage is recognized, the increase of the wire feed speed v2 is stopped and the wire feed speed v2 is reduced by 5% in order to ensure a safe and reliable operating window. Particularly, the voltage can be set in a computer program stored in a memory of the apparatus 1 and executed on a processor of the apparatus 1.

Preferably, the critical voltage being the total arc voltage of the first wire that is needed to melt the first wire is determined in the starting phase and is preferably continuously compared to the actual voltage while feeding the second wire in order to be able to identify when the critical voltage is reached and double arcing to the second wire can occur. The total arc voltage can be used to determine the arc properties and is thus a controlling factor in the process. The total arc voltage is a function of the arc length and the anode and cathode fall region(s).

As the critical voltage depends on the current, first wire, first wire coating, base material of first wire, welding gas, etc. it is always preferably determined in the beginning of the process. The critical value could also be stored in a database (e.g. in said memory)

Furthermore, in order to increase a melting rate and to improve the droplet detachment from the second wire 3, the second wire 3 is preferably oscillated forward and backward without the arc 5 jumping from the first wire 2 to the second wire 3.

However, jumping of the arc 5 from the first wire 2 to the second wire 3 can also be forced and thus used in a targeted fashion. The above described control procedure can be used to control the jumping. Especially, a time during which the arc 5 is connected to the second wire 3 can be set. Particularly, this time is sufficiently short to avoid evaporation of the second wire 3.

## Claims

1. A welding apparatus (1), comprising:
- a first wire (2) comprising an end section (2a) extending along a first direction (D1), the end section of the first wire comprising a tip (2b),
- a second wire (3) comprising an end section (3a) extending along a second direction (D2), the end section of the second wire (3) comprising a tip (3b) and being electrically insulated from the first wire (2),
- a power supply (4) electrically connectable by the welding apparatus (1) to the first wire (2) to generate an electrical current through the tip (2b) of the first wire (2) that generates an arc (5) between the tip (2b) of the first wire (2) and at least one workpiece (6) to be welded so as to cause transfer of material of the end section (2a) of the first wire (2) to the at least one workpiece (6), the second wire (3) being electrically insulated from the power supply (4) and the first wire (2),
- a first wire feed unit (20) configured to feed the first wire (2) into a weld pool (50) on the at least one workpiece (6) in the first direction (D1) with a first wire feed speed (v1), and
- a second wire feed unit (30) configured to feed the second wire (3) into the weld pool (50) in the second direction (D2) with a second wire feed speed (v2), wherein the first direction (D1) and the second direction (D2) run at an angle (α) to each other that is in the range from 0° to 25°.

2. The welding apparatus according to claim 1, wherein the welding apparatus (1) comprises a torch (7), the torch comprising a wire feeding tip (8) through which the first and the second wire (2, 3) are transported in the respective direction (D1, D2), the wire feeding tip (8) being configured to conduct said electrical current into the first wire (2) while insulating the second wire (3) from the first wire (2) and the power supply (4).

3. The welding apparatus according to claim 1 or 2, wherein the welding apparatus (1) is configured such that the second wire (3) does not carry an arc-generating electrical current.

4. The welding apparatus according to claim 1 or 2, wherein the welding apparatus (1) is configured such that the second wire (3) does either not carry an arc-generating electrical current or allows the arc (5) to temporarily jump over from the tip (2b) of the first wire (2) to the second wire (3) depending on the second wire feed speed (v2).

5. The welding apparatus according to claim 2 or according to one of the claims 3 to 4 insofar referring to claim 2, wherein the torch (7) is configured to allow adjustment of said angle (α) in said range.

6. The welding apparatus according to one of the preceding claims, wherein said angle (α) is in the range from 0° to 15°.

7. The welding apparatus according to one of the preceding claims, wherein the first wire feed unit (20) is configured to feed the first wire (2) with a first wire feed speed (v1) being equal to 8m/min or larger than 8m/min, and/or wherein the second wire feed unit (30) is configured to feed the second wire (3) with a second wire feed speed (v2) in the range from 0.5m/min to 6m/min, preferably from 2m/min to 4m/min.

8. The welding apparatus according to claim 2 or according to one of the claims 3 to 7 insofar referring to claim 2, wherein the torch (7) comprises a gas nozzle (9) configured to discharge a welding gas onto the weld pool (50).

9. The welding apparatus according to one of the preceding claims, wherein said transfer of material corresponds to spray transfer.

10. The welding apparatus according to one of the preceding claims, wherein the welding apparatus (1) is configured to oscillate the second wire (3) back and forth in the second direction (D2) upon feeding the second wire (3) into the weld pool (50).

11. A welding method for welding at least one workpiece (6) using a welding apparatus (1) according to one of the preceding claims, wherein the method comprises the steps of:
- generating an arc (5) between the tip (2b) of the first wire (2) and the at least one workpiece (6),
- feeding the first wire (2) into a weld pool (50) generated on the at least one workpiece (6) by the arc (5) in the first direction (D1) with a first wire feed speed (v1), and
- feeding the second wire (3) into the weld pool (50) in the second direction (D2) with a second wire feed speed (v2), the first direction (D1) and the second direction (D2) running at an angle to each other that is in the range from 0° to 25°.

12. The welding method according to claim 11, wherein the second wire feed speed (v2) is controlled based on a total arc voltage.

13. The welding method according to claim 11 or 12, wherein feeding the second wire (3) into the weld pool (50) is started with increasing second wire feed speed (v2) after having started feeding the first wire (2) into the weld pool (50).

14. The welding method according to claims 12 and 13, wherein upon feeding the second wire (3) into the weld pool (50) the total arc voltage is measured, wherein once an increase in the total arc voltage is recognized, increasing the second wire feed speed (v2) is stopped and the second wire feed speed (v2) is reduced by at least 5%.

15. The welding method according wherein the second wire (3) is oscillated back and forth in the second direction (D2) upon feeding the second wire (3) into the weld pool (50).
